(19) Europäisches Patentamt / European Patent Office / Office européen des brevets

(11) **EP 3 208 387 B1**

(12) **EUROPEAN PATENT SPECIFICATION**

(45) Date of publication and mention of the grant of the patent:
**09.12.2020 Bulletin 2020/50**

(21) Application number: **15850315.1**

(22) Date of filing: **13.10.2015**

(51) Int Cl.:
*E02F 9/20* (2006.01)   *B60K 6/28* (2007.10)
*B60K 6/485* (2007.10)   *B60L 9/18* (2006.01)
*B60W 10/06* (2006.01)   *B60W 10/08* (2006.01)
*B60W 10/30* (2006.01)   *B60W 20/00* (2016.01)
*H02J 7/00* (2006.01)   *B60W 20/10* (2016.01)
*B60K 6/20* (2007.10)

(86) International application number:
**PCT/JP2015/078956**

(87) International publication number:
**WO 2016/060132 (21.04.2016 Gazette 2016/16)**

(54) **HYBRID CONSTRUCTION MACHINERY**

HYBRIDBAUMASCHINE

MACHINES DE CONSTRUCTION HYBRIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2014 JP 2014210069**

(43) Date of publication of application:
**23.08.2017 Bulletin 2017/34**

(73) Proprietor: **Hitachi Construction Machinery Co., Ltd.**
**Taito-ku,**
**Tokyo 110-0015 (JP)**

(72) Inventors:
• **TAKAHASHI, Chiaki**
  **Tokyo 100-8280 (JP)**
• **IMURA, Shinya**
  **Tsuchiura-shi**
  **Ibaraki 300-0013 (JP)**
• **TAKEUCHI, Ken**
  **Tsuchiura-shi**
  **Ibaraki 300-0013 (JP)**

• **ISHIDA, Seiji**
  **Tsuchiura-shi**
  **Ibaraki 300-0013 (JP)**
• **NAYA, Itaru**
  **Tsuchiura-shi**
  **Ibaraki 300-0013 (JP)**
• **HITA, Masafumi**
  **Tsuchiura-shi**
  **Ibaraki 300-0013 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 2 374 945      EP-A1- 2 666 692**
**JP-A- 2010 077 727   JP-A- 2010 116 708**
**JP-A- 2010 133 236   JP-A- 2012 233 312**
**JP-A- 2014 066 075   US-A1- 2010 332 088**

**Description**

TECHNICAL FIELD

The present invention relates to hybrid construction machine including an electrical storage device that supplies electric power to a motor generator.

BACKGROUND ART

In recent years, in automobiles, those of a hybrid type and an electric type have become popular from the viewpoint of energy saving, and turning into the hybrid type has been in progress with respect to the construction machine also. In general, construction machine such as a hydraulic excavator driven by a hydraulic system includes a hydraulic pump that enables work of a maximum load, a hydraulic working device driven by hydraulic oil discharged from the hydraulic pump, and a large engine that drives the hydraulic pump in order to cope with all works from a light load work to a heavy load work.

However, the heavy load work such as a heavy excavation work for frequently excavating/loading the soil in construction machine by the hydraulic working device is only a part of the entire work, and, at the time of the light load work such as horizontal drawing for flattening the ground surface, the capacity of an engine becomes surplus. This fact is one of the factors making reduction of the fuel consumption of a hydraulic excavator difficult. In view of this point, such hybrid construction machine is known in which the engine is made compact in order to reduce the fuel consumption, and the power shortage accompanying compactization of the engine is assisted (supplemented) by an output of an electrical storage device and an electric motor.

For the electrical storage device of such hybrid construction machine, a lithium ion battery and a capacitor (an electric double layer capacitor, a lithium ion, and the like), for example, are used. These electrical storage devices have a risk of causing a thermal impact and deterioration of the performance unless the storage battery characteristics such as the voltage, electric current, temperature, and state of charge (will be hereinafter written as SOC) are within an appropriate range. Therefore, with respect to hybrid construction machine mounted with an electrical storage device, a control method has been disclosed in which maximum electric power with which the electrical storage device can be charged/discharged is calculated on the basis of the storage battery characteristics described above, and charging/discharging electric power of the electrical storage device is limited to the range of this calculated value, and thereby the electrical storage device is operated in a safe state.

As one of prior arts of this kind, a charge/discharge control method disclosed in Patent Literature 1 described below is known, for example. The charge/discharge control method of this prior art is applied to a system including a first inverter that controls a generator, a second inverter that drives an electric motor, and an electrical storage device that is connected to these respective inverters through a converter and is charge/discharge controlled by the converter, and is implemented by a control device that controls the system.

In concrete terms, in the charge/discharge control method of the prior art, in order to keep the SOC of the electrical storage device within a predetermined range, a smaller one out of a maximum discharge amount calculated from the present SOC of the electrical storage device and a maximum discharge amount calculated considering a predetermined maximum electric current is set to an output upper limit value, a smaller one out of a maximum charge amount calculated from the present SOC of the electrical storage device and a maximum charge amount calculated considering the predetermined maximum electric current is set to an output lower limit value, electric power required by a load or electric power generated by a generator is limited by the set output upper limit value and output lower limit value, and actual discharge amount and charge amount of the electrical storage device are determined.

CITATION LIST

regenerative electrical power generated by a motor during regenerative braking surpasses acceptable charging electrical power of a capacitor, drives a motor generator using the surplus electrical power; an engine controller which detects the rotating speed of an engine; a motor control unit which, if the rotating speed of the engine becomes larger than a second set value while the motor generator is being driven by the surplus electrical power, reduces regenerative torque generated by the motor; and a brake control unit which, if the rotating speed of the engine becomes larger than the second set value while the motor generator is being driven by the surplus electrical power, increases regenerative torque generated by a hydraulic brake.

Patent Literature 3 describes a situation when a hybrid-type construction machine including an electric power accumulator is started under a low-temperature environment, at first an ignition key of an engine is turned on to drive the engine. If the temperature of the electric power accumulator is lower than a predetermined temperature, the electric power accumulator is heated by driving the engine. Further, if the temperature of the electric power accumulator is lower than the predetermined temperature, the engine is driven to carry out a warm-up operation and a motor generator is driven to charging and discharge the electric power accumulator to thereby heat the electric power accumulator.

CITATION LIST

PATENT LITERATURE

Patent Literature 1: Japanese Patent No. 5225779
Patent Literature 2: EP-A-2 666 692
Patent Literature 3: EP-A-2 374 945

## SUMMARY OF INVENTION

### TECHNICAL PROBLEM

However, according to the charge/discharge control method of the prior art disclosed in Patent Literature 1, since limitation of the electric power required by a load or the electric power generated by a generator is effected by respective inverters on the basis of the set output upper limit value and output lower limit value of the electrical storage device, a state of an engine and a hydraulic load has not been considered. Therefore, it is concerned that, when the load sharply increases due to contact of a hydraulic working device and an obstacle and so on during working by hybrid construction machine, an output of an engine as a drive source and electric power supplied by an electrical storage device as an electric power source and electric power required by the load are not well balanced, therefore adjustment of the rotational speed of an engine cannot catch up the sharp increase of the load, the rotational speed of the engine drops (so-called lag-down occurs), and thereby the engine stops.

The present invention has been achieved in view of such circumstance of the prior arts, and its object is to provide hybrid construction machine that can effect charging/discharging of an electrical storage device appropriately, and can suppress stop of an engine accompanying sharp increase of a load.

### SOLUTION TO PROBLEM

The object described above is solved by the appended independent claims. Preferred further developments are claimed by the dependent claims. The claimed subject-matter in particular includes a hybrid construction machine which includes an engine, a hydraulic pump that is driven by the engine, hydraulic working devices that are driven by hydraulic oil discharged from the hydraulic pump, a motor generator that transmits torque between the engine, an inverter that controls the motor generator, an electrical storage device that effects charging/discharging through the inverter, and a control device that controls power of the hydraulic pump and electric power of the inverter in response to storage battery characteristics of the electrical storage device, in which the control device controls at least either one of power of the hydraulic pump and electric power of the inverter on the basis of at least either one of electric current or voltage of the storage battery characteristics and at least either one of temperature or a state of charge of the storage battery characteristics.

Also, the claimed subject-matter in particular includes a hybrid construction machine which includes an engine, a hydraulic pump that is driven by the engine, hydraulic working devices that are driven by hydraulic oil discharged from the hydraulic pump, a motor generator that transmits torque between the engine, an inverter that controls the motor generator, an electrical storage device that effects charging/discharging through the inverter, and a control device that controls power of the hydraulic pump and electric power of the inverter in response to storage battery characteristics of the electrical storage device, in which the control device controls at least either one of power of the hydraulic pump and electric power of the inverter on the basis of at least either one of voltage or a state of charge of the storage battery characteristics and at least either one of temperature or electric current of the storage battery characteristics.

### ADVANTAGEOUS EFFECTS OF INVENTION

According to the hybrid construction machine of the present invention, charging/discharging of an electrical storage device can be effected appropriately, and stop of an engine accompanying sharp increase of a load can be suppressed. Problems, configurations and effects other than the above will be clarified by explanation of embodiments below.

### BRIEF DESCRIPTION OF DRAWINGS

[Fig. 1] Fig. 1 is a drawing showing a configuration of a hybrid hydraulic excavator cited as a first embodiment of hybrid construction machine related to the present invention.
[Fig. 2] Fig. 2 is a function block diagram showing a configuration inside a revolving upper structure related to the first embodiment of the present invention.
[Fig. 3] Fig. 3 is a function block diagram showing a configuration of a battery controller related to the first embodiment of the present invention.
[Fig. 4] Fig. 4 is a function block diagram showing a configuration of a hybrid controller related to the first embodiment of the present invention.
[Fig. 5] Fig. 5 is a rotational speed-output upper limit value characteristic diagram explaining the output characteristics of an engine related to the first embodiment of the present invention.

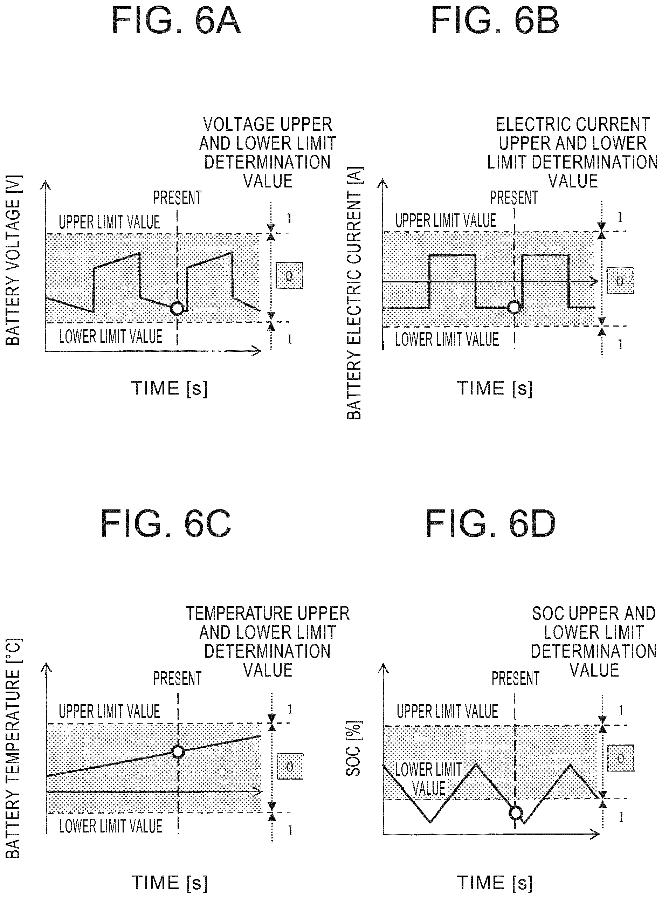

[Fig. 6] Fig. 6 is a drawing showing an example of a time series change of each storage battery characteristic of an electrical storage device and an upper and lower limit determination value of each storage battery characteristic of the electrical storage device related to the first embodiment of the present invention, FIG. 6A is a drawing showing a time series change of the voltage of the electrical storage device and an upper and lower limit determination value of the voltage of the electrical storage device, FIG. 6B is a drawing showing a time series change of the electric current of the electrical storage device and an upper and lower limit determination value of the electric current of the electrical storage device, FIG. 6C is a drawing showing a time series change of the temperature of the electrical storage device and an upper and lower limit determination value of the temperature of the electrical storage device, and FIG. 6D is a drawing showing a time series change of the SOC of the electrical storage device and an upper and lower limit determination value of the SOC of the electrical storage device.

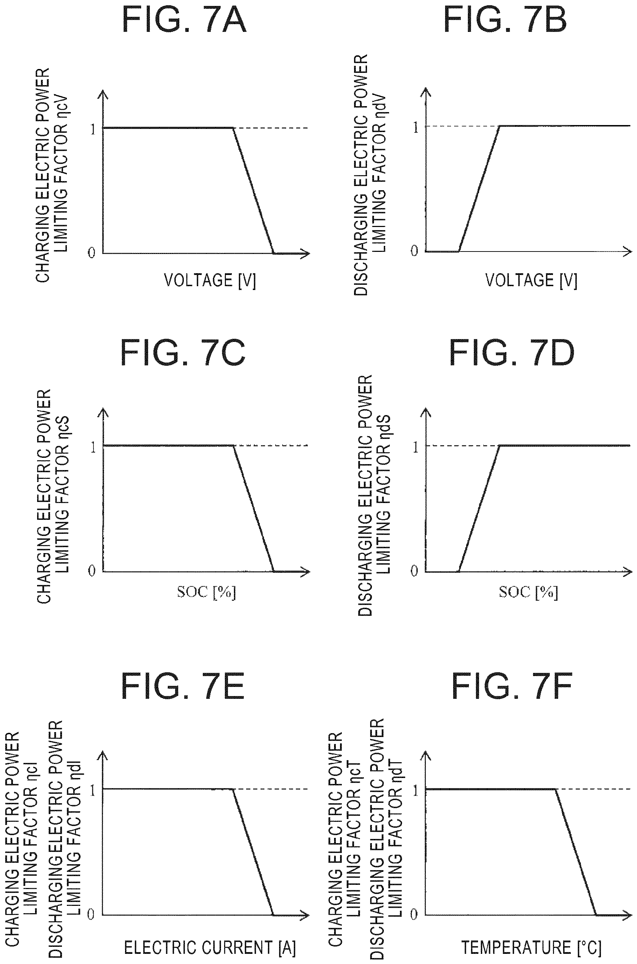

[Fig. 7] Fig. 7 is a drawing showing a charging/discharging electric power limiting factor with respect to each storage battery characteristic of the electrical storage device related to the first embodiment of the present invention, FIG. 7A is a drawing showing a charging/discharging electric power limiting factor with respect to the voltage of the electrical storage device, FIG. 7B is a drawing showing a charging/discharging electric power limiting factor with respect to the voltage of the electrical storage device, FIG. 7C is a drawing showing a charging/discharging electric power limiting factor with respect to the SOC of the electrical storage device, FIG. 7D is a drawing showing a charging/discharging electric power limiting factor with respect to the SOC of the electrical storage device, FIG. 7E is a drawing showing a charging/discharging electric power limiting factor with respect to the electric current of the electrical storage device, and FIG. 7F is a drawing showing a charging/discharging electric power limiting factor with respect to the temperature of the electrical storage device.

[Fig. 8] Fig. 8 is a flowchart showing a flow of control processing of an output command unit related to the first embodiment of the present invention.

[Fig. 9] Fig. 9 is a drawing showing the temporal transition of the power required for a hydraulic pump, the upper limit value of the output of an engine, and the electric power required for an inverter.

[Fig. 10] Fig. 10 is a drawing explaining the setting range of the command value of the electric power required for the inverter when a regenerative motion is executed.

[Fig. 11] FIG. 11A is a drawing showing the temporal transition of the electric power of the inverter when the output command unit related to the first embodiment of the present invention limits the electric power of the inverter, and FIG. 11B is a drawing showing the temporal transition of the power of the hydraulic pump when the output command unit related to the first embodiment of the present invention limits the power of the hydraulic pump.

[Fig. 12] Fig. 12 is a drawing explaining selection of the type of the output limit control by the output command unit related to the first embodiment of the present invention.

[Fig. 13] Fig. 13 is a flowchart showing a flow of control processing of an output command unit related to a second embodiment of the present invention.

[Fig. 14] Fig. 14 is a function block diagram showing a configuration inside a revolving upper structure related to a third embodiment of the present invention.

[Fig. 15] Fig. 15 is a drawing explaining selection of the type of the output limit control by an output command unit related to the third embodiment of the present invention.

DESCRIPTION OF EMBODIMENTS

Below, embodiments of hybrid construction machine related to the present invention will be explained on the basis of the drawings.

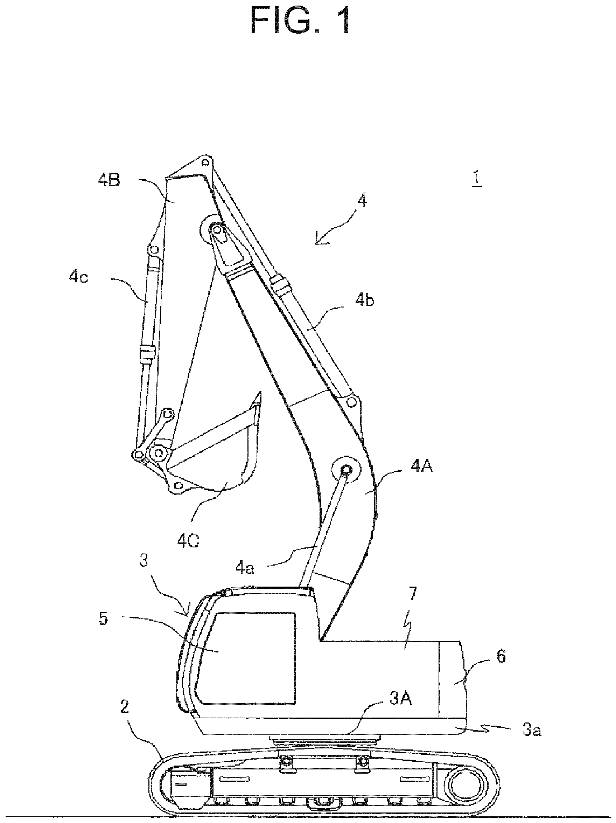

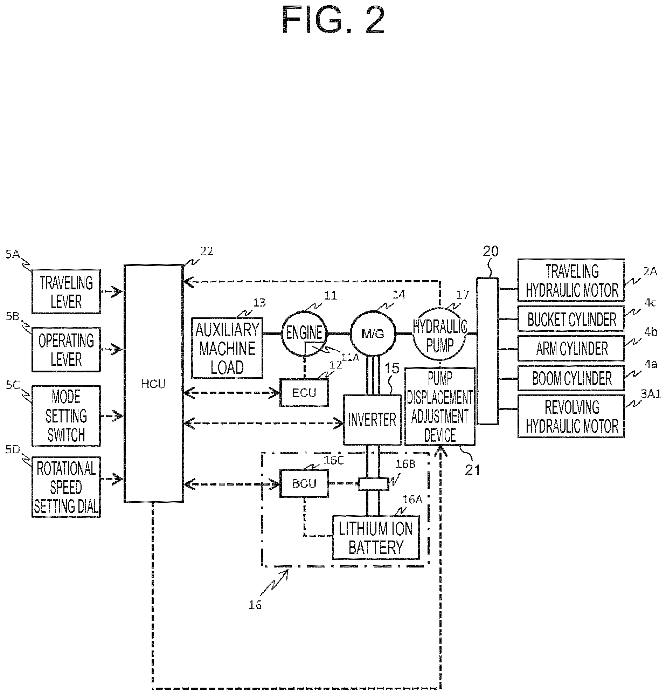

An embodiment of the hybrid construction machine related to the present invention is applied, for example, to a hybrid hydraulic excavator (will be hereinafter conveniently referred to as a hybrid excavator) 1 shown in Fig. 1. This hybrid excavator 1 includes a traveling body 2, a revolving upper structure 3, a revolving device 3A, and a front working mechanism 4, the traveling body 2 being driven by a traveling hydraulic motor 2A (refer to Fig. 2), the revolving upper structure 3 being arranged turnably on the traveling body 2 through a revolving frame 3a, the revolving device 3A being interposed between the traveling body 2 and the revolving upper structure 3, a revolving hydraulic motor 3A1 (refer to Fig. 2) that revolves the revolving upper structure 3 with respect to the traveling body 2 being mounted on the revolving device 3A, the front working mechanism 4 being attached to one side (the right side in facing the front) of the front part of the revolving upper structure 3, rotating in the vertical direction, and executing work of excavation and the like. The traveling body 2, the revolving upper structure 3, and the front working mechanism 4 described above function as hydraulic working devices.

The front working mechanism 4 is configured of a multi-joint structure that includes a boom 4A that rotates in the vertical direction with a base end thereof being rotatably attached to the revolving frame 3a, an arm 4B that is rotatably attached to the distal end of the boom 4A, and a bucket 4C that is rotatably attached to the distal end of the arm 4B. Also, the front working mechanism 4 includes a boom cylinder 4a, an arm cylinder 4b, and a bucket cylinder 4c, the boom cylinder 4a connecting the revolving upper structure 3 and the boom 4A and rotating the boom 4A by expansion and contraction, the arm cylinder 4b connecting the boom 4A and the arm 4B and rotating the arm 4B by expansion and contraction, the bucket cylinder 4c connecting the arm 4B and the bucket 4C and rotating the bucket 4C by expansion and contraction.

The revolving upper structure 3 includes a cab 5, a counterweight 6, and a prime mover chamber 7, the cab 5 being arranged on the other one side (the left side in facing the front) of the front part of the vehicle body, the counterweight 6 being arranged at the rear part of the vehicle body and keeping balance of the weight of the vehicle body, the prime mover chamber 7 being arranged between the cab 5 and the counterweight 6, an engine 11 (refer to Fig. 2) described below being stored in the prime mover chamber 7.

Fig. 2 is a drawing showing the detail of a configuration inside the revolving upper structure 3 including the cab 5.

As shown in Fig. 2, the cab 5 includes a traveling lever 5A and an operating lever 5B, a mode setting unit 5C, and a rotational speed setting dial 5D, the traveling lever 5A and the operating lever 5B allowing a desired motion of respective hydraulic actuators 2A, 3A1, 4a-4c such as the traveling hydraulic motor 2A, the revolving hydraulic motor 3A1, the boom cylinder 4a, the arm cylinder 4b, and the bucket cylinder 4c, an operator inside the cab 5 holding and operating the traveling lever 5A and the operating lever 5B, the mode setting unit 5C setting a motion mode of the vehicle body and changing a load required for the vehicle body, the rotational speed setting dial 5D setting the target rotational speed of the engine 11 in the motion mode set by the mode setting unit 5C. The mode setting unit 5C is configured of a mode setting switch that selects a motion mode such as an eco-mode and a power mode, the eco-mode being a mode when work of a light load or a medium load such as light excavation work and land flattening work, for example, is executed, the power mode being a mode when work of a higher load than that of the eco-mode is executed.

The revolving upper structure 3 includes the engine 11 described above, a rotational speed sensor 11A, a fuel tank (not illustrated), a governor (not illustrated), a supercharger (not illustrated), and an engine controller (ECU) 12, the rotational speed sensor 11A being attached to the engine 11 and detecting the rotational speed of the engine 11, the fuel tank storing fuel of the engine 11, the governor adjusting the fuel injection amount of the engine 11, the supercharger being a turbocharger type arranged in the engine 11, the engine controller (ECU) 12 controlling the motion of the engine 11.

Also, the revolving upper structure 3 includes an auxiliary machine load 13, a motor generator (M/G) 14, an inverter 15, an electrical storage device 16, a variable displacement type hydraulic pump (will be hereinafter conveniently referred to as a hydraulic pump) 17, and a pilot pump (not illustrated), the auxiliary machine load 13 being an air conditioner and the like that is connected to the engine 11 and is activated by a driving force of the engine 11, the motor generator (M/G) 14 being arranged on a driving shaft of the engine 11 and transmitting torque between the engine 11, the inverter 15 being connected to the motor generator 14 and controlling the motor generator 14, the electrical storage device 16 executing charging/discharging through the inverter 15, the variable displacement type hydraulic pump 17 being connected to the engine 11 and the motor generator 14 in series and being driven by the engine 11 to discharge hydraulic oil, the pilot pump being activated by a driving force of the engine 11 to thereby generate pilot hydraulic oil.

The motor generator 14 is configured to assist the power of the engine 11 at the time of powering, to drive the auxiliary machine load 13 and the hydraulic pump 17 which are connected to the engine 11, and to generate the electric power at the time of regeneration. The inverter 15 converts the DC electric power to the AC electric power, and converts the AC electric power to the DC electric power. The electrical storage device 16 includes a lithium ion battery 16A, an electric current sensor 16B, and a battery controller (BCU) 16C, for example, the lithium ion battery 16A being formed by laminating plural battery cells, the electric current sensor 16B being connected between the lithium ion battery 16A and the inverter 15 and measuring the electric current of the lithium ion battery 16A, the battery controller (BCU) 16C being connected to the lithium ion battery 16A and the electric current sensor 16B and measuring and managing the voltage, temperature, electric current, and the like of the lithium ion battery 16A.

Also, when the electric power (energy) stored in the lithium ion battery 16A is supplied to the inverter 15, the electric power is converted from DC to AC by the inverter 15, and is supplied to the motor generator 14. It is configured such that the electrical storage device 16 is thereby discharged. In contrast, the electric power (energy) generated by the motor generator 14 is converted from AC to DC by the inverter 15, and is supplied to the electrical storage device 16. It is configured such that the electrical storage device 16 is thereby charged.

The hydraulic pump 17 includes a swash plate (not illustrated), for example, as a variable displacement mechanism, and controls the flow rate of the discharged hydraulic oil by that the tilting angle of this swash plate is adjusted. Further, the hydraulic pump 17 includes a discharge pressure sensor that measures the pressure of the discharged hydraulic oil, a discharge flow rate sensor that measures the flow rate of the discharged hydraulic oil, a tilting angle sensor that measures the tilting angle of the swash plate of the hydraulic pump 17, and so on although they are not illustrated. In addition, although the hydraulic pump 17 will be explained for a case of a variable displacement type swash plate hydraulic pump, the hydraulic pump 17 is not limited to it, and may be a bent axis type pump and the like as far as it is one having a function of controlling the flow rate of the discharged hydraulic oil.

Also, the revolving upper structure 3 includes a control valve 20, a pump displacement adjustment device 21, and a hybrid controller (HCU) 22, the control valve 20 controlling the flow (the flow rate and the direction) of the hydraulic oil supplied to the hydraulic actuators 2A, 3A1, 4a-4c, the pump displacement adjustment device 21 adjusting the displacement of the hydraulic pump 17, the hybrid controller 22 being a control device that is connected to the traveling lever 5A, the operating lever 5B, the mode setting switch 5C, the rotational speed setting dial 5D, the hydraulic pump 17, the engine controller 12, the inverter 15, the battery controller 16C, and the pump displacement adjustment device 21, and controls the motion of the entire vehicle body including the power of the hydraulic pump 17 and the electric power of the inverter 15.

The control valve 20 forms a hydraulic circuit between the hydraulic pump 17 and the hydraulic actuators 2A, 3A1, 4a-4c, and includes a spool in the inside although it is not illustrated, the spool stroking inside a housing that forms the outer shell and thereby adjusting the flow rate and the direction of the hydraulic oil discharged from the hydraulic pump 17.

The pump displacement adjustment device 21 adjusts the capacity (displacement volume) of the hydraulic pump 17 on the basis of a control command outputted from the hybrid controller 22. In concrete terms, the pump displacement adjustment device 21 includes a regulator and an electromagnetic proportional valve although they are not illustrated, the regulator tiltably supporting the swash plate of the hydraulic pump 17, the electromagnetic proportional valve applying a control pressure to the regulator in response to the control command from the hybrid controller 22. When the control pressure is received from the electromagnetic proportional valve, the regulator changes the tilting angle of the swash plate of the hydraulic pump 17 by the control pressure, and thereby the capacity (displacement volume) of the hydraulic pump 17 is adjusted. Thus, the load (pump output) of the hydraulic pump 17 can be adjusted by making the discharge pressure of the hydraulic pump 17 variable and controlling the torque (input torque) of the hydraulic pump 17.

The hybrid controller 22 is inputted with the discharge pressure measured by the discharge pressure sensor, the discharge flow rate measured by the discharge flow rate sensor, and the tilting angle measured by the tilting angle sensor, and calculates the load of the hydraulic pump 17 from the input information of them. The traveling lever 5A and the operating lever 5B reduce the primary pressure generated by the hydraulic oil discharged from the pilot pump to the secondary pressure in response to the operation opening degree of a pressure reducing valve (remote control valve) provided in the respective devices to generate the control pilot pressure, and transmits the same as the hybrid controller 20 as a hydraulic operation signal. The hybrid controller 22 transmits the control command that controls the power of the hydraulic pump 17 to an electromagnetic proportional valve of the pump displacement adjustment device 21 in response to the hydraulic operation signal received.

Also, the control pilot pressure generated is configured to be sent to a pressure receiving chamber of the control valve 20 although it is not illustrated. Thus, the position of the spool of the control valve 20 is switched, the hydraulic oil having circulated the control valve 20 from the hydraulic pump 17 is supplied to the hydraulic actuators 2A, 3A1, 4a-4c, and the hydraulic actuators 2A, 3A1, 4a-4c are thereby driven by the hydraulic oil supplied from the hydraulic pump 17 through the control valve 20.

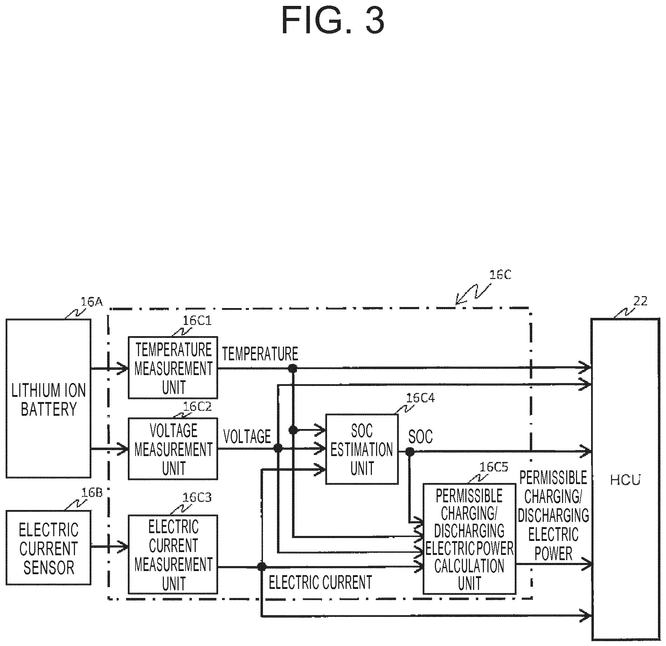

Fig. 3 is a function block diagram showing a configuration of the battery controller 16C.

The battery controller 16C includes a temperature measurement unit 16C1, a voltage measurement unit 16C2, an electric current measurement unit 16C3, and an SOC estimation unit 16C4, the temperature measurement unit 16C1 measuring the temperature of the lithium ion battery 16A, the voltage measurement unit 16C2 measuring the voltage of the lithium ion battery 16A, the electric current measurement unit 16C3 AD-converting and inputting the measured value of the electric current sensor 16B, the SOC estimation unit 16C4 estimating the state of charge (will be hereinafter referred to as SOC) of the electrical storage device 16 on the basis of the temperature measured by the temperature measurement unit 16C1, the voltage measured by the voltage measurement unit 16C2, and the electric current inputted by the electric current measurement unit 16C3.

Also, the battery controller 16C includes a permissible charging/discharging electric power calculation unit 16C5 that calculates the permissible charging/discharging electric power that is the chargeable/dischargeable maximum electric power of the lithium ion battery 16A on the basis of the temperature measured by the temperature measurement unit 16C1, the voltage measured by the voltage measurement unit 16C2, the electric current inputted by the electric current measurement unit 16C3, and the SOC estimated by the SOC estimation unit 16C4. Further, the information of the storage battery characteristics including the temperature measured by the temperature measurement unit 16C1, the voltage measured by the voltage measurement unit 16C2, the electric current inputted by the electric current measurement unit 16C3, and the SOC estimated by the SOC estimation unit 16C4 and the permissible charging/discharging electric power calculated by the permissible charging/discharging electric power calculation unit 16C5 is inputted to the hybrid controller 22.

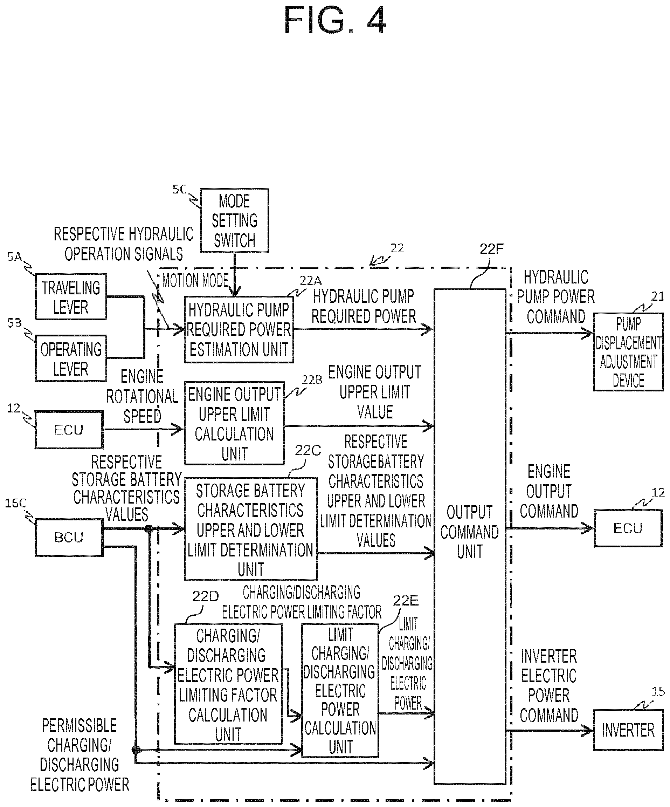

Fig. 4 is a function block diagram showing a configuration of the hybrid controller 22.

The hybrid controller 22 includes a hydraulic pump required power estimation unit 22A and an engine output upper limit calculation unit 22B, the hydraulic pump required power estimation unit 22A being connected to the traveling lever 5A, the operating lever 5B, and the mode setting switch 5C and estimating the power required for the hydraulic pump 17 (will be hereinafter conveniently referred to as hydraulic pump required power), the engine output upper limit calculation unit 22B being connected to the engine controller 12 and calculating the upper limit value of the output of the engine 11 (will be hereinafter conveniently referred to as an engine output upper limit value).

Also, the hybrid controller 22 includes a storage battery characteristics upper and lower limit determination unit 22C, a charging/discharging electric power limiting factor calculation unit 22D, and a limiting charging/discharging electric power calculation unit 22E, the storage battery characteristics upper and lower limit determination unit 22C determining whether or not the values of the storage battery characteristics are within a predetermined upper and lower limit range on the basis of respective storage battery characteristics received from the battery controller 16C, the charging/discharging electric power limiting factor calculation unit 22D calculating the charging/discharging electric power limiting factor of respective storage battery characteristics used for limiting the charging/discharging electric power of the electrical storage device 16 on the basis of respective storage battery characteristics received from the battery controller 16C, the limiting charging/discharging electric power calculation unit 22E calculating the charging/discharging electric power of the electrical storage device 16 (will be hereinafter conveniently referred to as limiting charging/discharging electric power) for controlling the values of respective storage battery characteristics so as to fall within the upper and lower limit range of the respective storage battery characteristics when the values of respective storage battery characteristics received from the battery controller 16C become out of a predetermined upper and lower limit range. Further, in the hybrid controller 22, a storage device (ROM and the like) for storing various information required for determination and calculation described above is arranged in the inside although it is not illustrated.

Further, the hybrid controller 22 includes an output command unit 22F that is connected to the hydraulic pump required power estimation unit 22A, the engine output upper limit calculation unit 22B, the storage battery characteristics upper and lower limit determination unit 22C, the limiting charging/discharging electric power calculation unit 22E, the battery controller 16C, the pump displacement adjustment device 21, the engine controller 12, and the inverter 15, and calculates a value of the control command outputted to the pump displacement adjustment device 21, the engine controller 12, and the inverter 15.

Below, each configuration of the hybrid controller 22 will be explained in detail.

The hydraulic pump required power estimation unit 22A is inputted with the hydraulic operation signal of the traveling lever 5A and the operating lever 5B and the motion mode of the mode setting switch 5C, and, on the basis of the input information of them, estimates the output required for the traveling hydraulic motor 2A, the revolving hydraulic motor 3A1, the boom cylinder 4a, the arm cylinder 4b, and the bucket cylinder 4c, namely the output required for each motion of the hydraulic actuators 2A, 3A1, 4a-4c.

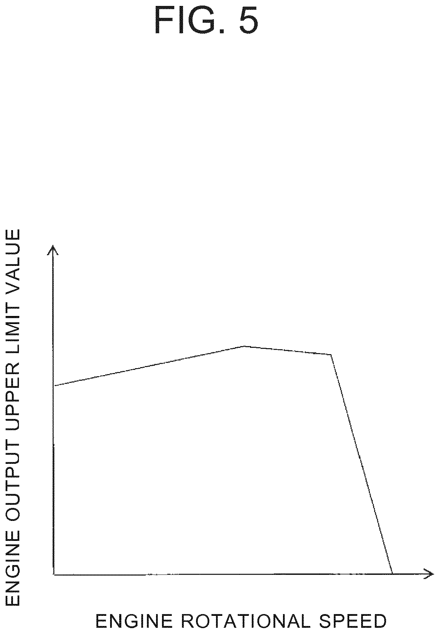

Fig. 5 is a drawing showing the relation between the rotational speed and the upper limit value of the output of the engine 11 as shown in Fig. 5, for example.

The storage device of the hybrid controller 22 stores an output characteristic table A set in response to the characteristics of the engine 11. This output characteristic table A shows, for example, the relation in which, when the rotational speed of the engine 11 is low, the engine output upper limit value increases accompanying rise of the rotational speed of the engine 11, and when the rotational speed of the engine 11 becomes high, the engine output upper limit value lowers accompanying rise of the rotational speed of the engine 11. Therefore, since the engine output upper limit value is determined by the rotational speed of the engine 11, the engine output upper limit value can be estimated from the rotational speed of the engine 11.

According to the first embodiment of the present invention, the engine output upper limit calculation unit 22B receives the rotational speed of the engine 11 detected by the rotational speed sensor 11A through the engine controller 12, and calculates the engine output upper limit value from the rotational speed of the engine 11 and the output characteristic table A. Also, the engine output upper limit calculation unit 22B outputs the calculated engine output upper limit value to the output command unit 22F. Further, the rotational speed of the engine 11 can be changed by that the operator adjusts the target rotational speed by the rotational speed setting dial 5D.

Fig. 6 is a drawing showing a time series change of the voltage, electric current, temperature, and SOC of the electrical storage device 16 and the upper and lower limit determination values of respective storage battery characteristics of them, and determination by the storage battery characteristics upper and lower limit determination unit 22C will be explained in detail referring to this drawing.

Here, with respect to the upper and lower limit values of respective storage battery characteristics of the electrical storage device 16, specified values set beforehand on the basis of the battery specification and the like, for example, are used, and are stored in the inside of the storage device of the hybrid controller 22. The storage battery characteristics upper and lower limit determination unit 22C determines the upper and lower limit determination value to be "0" when the value of each storage battery characteristic is within the upper and lower limit range as shown in Fig. 6, for example, determines the upper and lower limit determination value to be "1" when the value of each storage battery characteristic is out of the upper and lower limit range, and transmits the determination result to the output command unit 22F.

As the concrete examples, since respective values of the present voltage, electric current, and temperature of the electrical storage device 16 are within the upper and lower limit range as shown in Fig. 6A-Fig. 6C, the storage battery characteristics upper and lower limit determination unit 22C determines the respective upper and lower limit determination values of the voltage, electric current, and temperature of the electrical storage device 16 to be "0". In contrast, since the value of the present SOC of the electrical storage device 16 is out of the upper and lower limit range as shown in Fig. 6D, the storage battery characteristics upper and lower limit determination unit 22C determines the upper and lower limit determination value of the SOC of the electrical storage device 16 to be "1".

Fig. 7 is a drawing showing charging/discharging electric power limiting factors $\eta cV$, $\eta dV$, $\eta cS$, $\eta dS$, $\eta cl$, $\eta dl$, $\eta cT$, $\eta dT$ with respect to respective storage battery characteristics of the electrical storage device 16.

As shown in Fig. 7A-Fig. 7F, the storage device of the hybrid controller 22 stores a charging/discharging electric power limiting factor table B where the charging/discharging electric power limiting factors $\eta cV$, $\eta dV$, $\eta cS$, $\eta dS$, $\eta cl$, $\eta dl$, $\eta cT$, $\eta dT$ with respect to respective storage battery characteristics of the voltage, SOC, electric current, and temperature of the electrical storage device 16 are shown. For this charging/discharging electric power limiting factor table B, specified values set beforehand on the basis of the battery specifications and the like, for example, are used.

The charging/discharging electric power limiting factor calculation unit 22D receives the information of respective storage battery characteristics of the electrical storage device 16 from the battery controller 16C, calculates the charging/discharging electric power limiting factors $\eta cV$, $\eta dV$, $\eta cS$, $\eta dS$, $\eta cl$, $\eta dl$, $\eta cT$, $\eta dT$ with respect to respective storage battery characteristics from respective storage battery characteristics and the charging/discharging electric power limiting factor table B, and outputs the calculation results to the limit charging/discharging electric power calculation unit 22E.

The limit charging/discharging electric power calculation unit 22E uses the minimum values of the charging electric power limiting factors $\eta cV$, $\eta cl$, $\eta cT$, $\eta cS$ and the discharging electric power limiting factors $\eta dV$, $\eta dl$, $\eta dT$, $\eta dS$ with respect to respective storage battery characteristics calculated by the charging/discharging electric power limiting factor calculation unit 22D (will be hereinafter conveniently referred to as the minimum charging electric power limiting factors and the minimum discharging electric power limiting factors respectively) and the permissible charging/discharging electric power Ec, Ed calculated by the permissible charging/discharging electric power calculation unit 16C5, executes calculation using the mathematical expressions (1), (2) below, and transmits the calculation result to the output command unit 22F. Also, in the mathematical expression (1), Ec1 expresses limiting charging electric power, and $\eta c$-min expresses the minimum charging electric power limiting factor. In the mathematical expression (2), Edl expresses limiting discharging electric power, and $\eta dmin$ expresses the minimum discharging electric power limiting factor.

[Math. 1]

$$Ecl = Ec \cdot \eta cmim \qquad (1)$$

[Math. 2]

$$Edl = Ed \cdot \eta dmim \qquad (2)$$

The output command unit 22F calculates command values outputted to the pump displacement adjustment device 21, the engine controller 12, and the inverter 15 on the basis of the hydraulic pump required power estimated by the hydraulic pump required power estimation unit 22A, the engine output upper limit value calculated by the engine output upper limit calculation unit 22B, the upper and lower limit determination values of respective storage battery characteristics determined by the storage battery characteristics upper and lower limit determination unit 22C, the limiting charging/discharging electric power Ecl, Edl calculated by the limit charging/discharging electric power calculation unit 22E, and the permissible charging/discharging electric power Ec, Ed calculated by the permissible charging/discharging electric power calculation unit 16C5.

Then, the output command unit 22F outputs a hydraulic pump power command, an engine output command, and an inverter electric power command to the pump displacement adjustment device 21, the engine controller 12 and the inverter 15 respectively as the control commands corresponding to the calculated command values, and controls these respective devices. According to the first embodiment of the present invention, it is configured such that the output command unit 22F controls at least either one of the power of the hydraulic pump 17 and the electric power of the inverter 15 on the basis of at least either one of the electric current or the voltage of the storage battery characteristics of the electrical storage device 16 and at least either one of the temperature or the SOC of the storage battery characteristics.

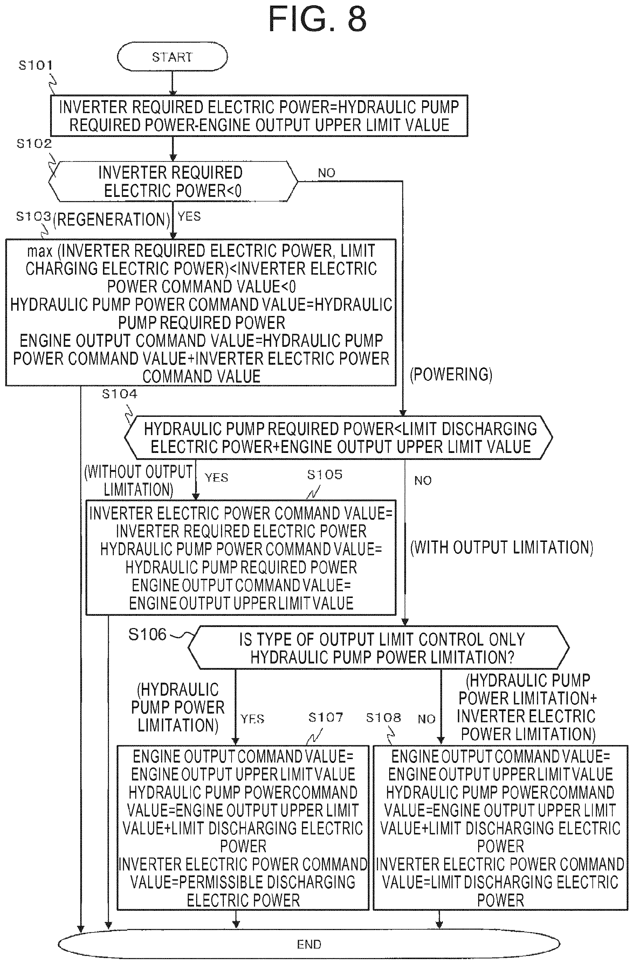

Next, control processing of the output command unit 22F will be explained in detail referring to the flowchart of Fig. 8. Also, with respect to calculation of the control processing described below, for the purpose of easy understanding of the explanation, the efficiency of the hydraulic load of the motor generator 14, the inverter 15, the lithium ion battery 16A, the hydraulic pump 17, the traveling hydraulic motor 2A, and the like is made 100%, and an ideal state without occurrence of the loss is assumed.

First, the output command unit 22C deducts the engine output upper limit value calculated by the engine output upper limit calculation unit 22B from the hydraulic pump required power estimated by the hydraulic pump required power estimation unit 22A, for example, and calculates the electric power required for the inverter 15 (will be hereinafter conveniently referred to as the inverter required electric power) (step (will be hereinafter written as S) 101).

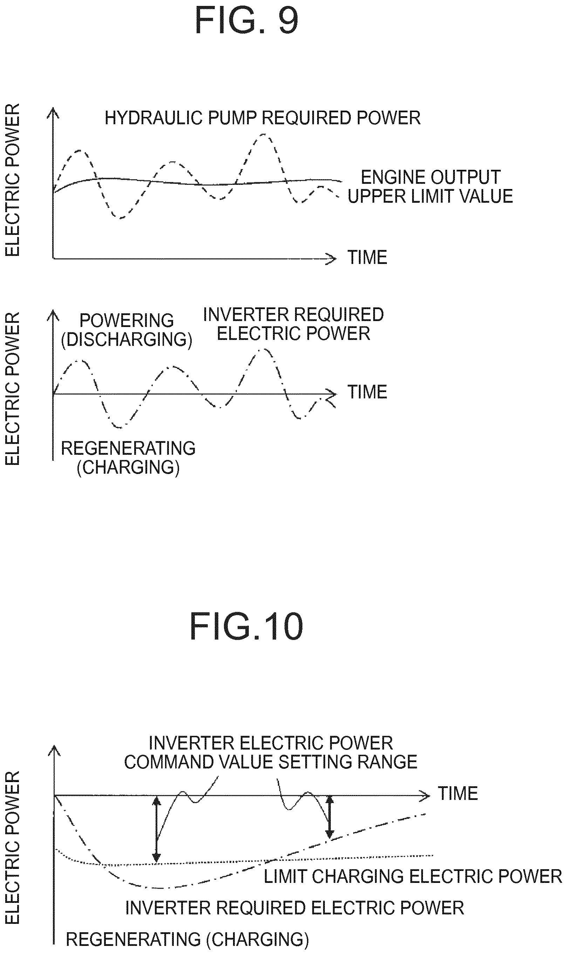

Fig. 9 shows the relation of these hydraulic pump required power, engine output upper limit value, and inverter required electric power.

As shown in Fig. 9, when the hydraulic pump required power is larger than the engine output upper limit value, the inverter required electric power becomes larger than 0 and becomes discharging electric power, whereas when the hydraulic pump required power is less than the engine output upper limit value, the inverter required electric power becomes less than 0 and becomes charging electric power. Therefore, when the control processing of S101 is executed, the output command unit 22F confirms the polarity of the inverter required electric power, and determines whether or not the inverter required electric power is less than 0 (S102). At this time, when the inverter required electric power is determined to be less than 0 (S102/YES), the output command unit 22F calculates respective command values for the pump displacement adjustment device 21, the engine controller 12, and the inverter 15 for executing a regenerative motion (S103).

Fig. 10 shows the temporal transition of the inverter required electric power and the limiting charging electric power when a regenerative motion is executed.

In S103, the output command unit 22F sets the value of the inverter electric power command to a value equal to or less than 0 on the basis of the SOC and the like of the electrical storage device 16, but determines the value of the inverter electric power command in a range not less than the limit charging electric power calculated by the limit charging/discharging electric power calculation unit 22E as shown in Fig. 10. In other words, the value of the inverter electric power command becomes limit charging electric power when the inverter required electric power is less than the limit charging electric power, and the value of the inverter electric power command becomes the inverter required electric power when the inverter required electric power is equal to or larger than limit charging electric power.

The output command unit 22F sets the value of the hydraulic pump power command to the hydraulic pump required power, and sets the value of the engine output command to the total value of the value of the hydraulic pump power command and the value of the inverter electric power command. Also, the output command unit 22F transmits the hydraulic pump power command, the engine output command, and the inverter electric power command to the pump displacement adjustment device 21, the engine controller 12, and the inverter 15 respectively, and finishes the control processing.

In contrast, when the inverter required electric power is determined to be equal to or larger than 0 in S102 (S102/NO), the output command unit 22F calculates respective command values for the pump displacement adjustment device 21, the engine controller 12, and the inverter 15 for executing a powering motion. In concrete terms, first, the output command unit 22F determines whether or not the hydraulic pump required power is less than the total value of the limit charging electric power calculated by the limit charging/discharging electric power calculation unit 22E and the engine output upper limit value (S104).

Also, when the hydraulic pump required power is determined to be less than the total value of the limit discharging electric power and the engine output upper limit value (S104/YES), the output command unit 22F calculates respective command values for the pump displacement adjustment device 21, the engine controller 12, and the inverter 15 for executing a powering motion without executing the output limit control (S105). When the hydraulic pump required power is determined to be equal to or larger than the total value of the limit discharging electric power and the engine output upper limit value (S104/NO), the output command unit 22F calculates respective command values for the pump displacement adjustment device 21, the engine controller 12, and the inverter 15 for executing a powering motion with execution of the output limit control (S106-S108).

In S105, the output command unit 22F sets a value of the inverter electric power command, a value of the hydraulic pump power command, and a value of the engine output command to the inverter required electric power, the hydraulic pump required power, and the engine output upper limit value respectively. Also, the output command unit 22F transmits the hydraulic pump power command, the engine output command, and the inverter electric power command to the pump displacement adjustment device 21, the engine controller 12, and the inverter 15 respectively, and finishes the control processing.

In S106, the output command unit 22F determines whether or not the type of output limit control is only limitation of the power of the hydraulic pump 17 from the upper and lower limit determination values of respective storage battery characteristics of the electrical storage device 16 determined by the storage battery characteristics upper and lower limit determination unit 22C.

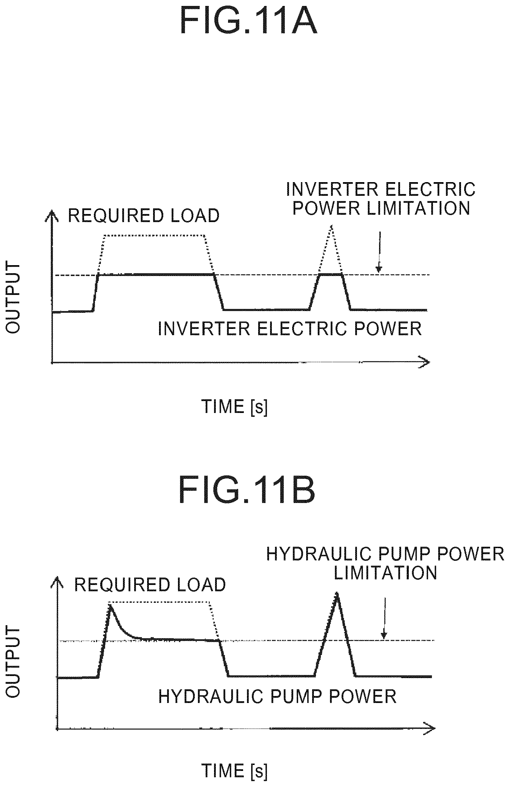

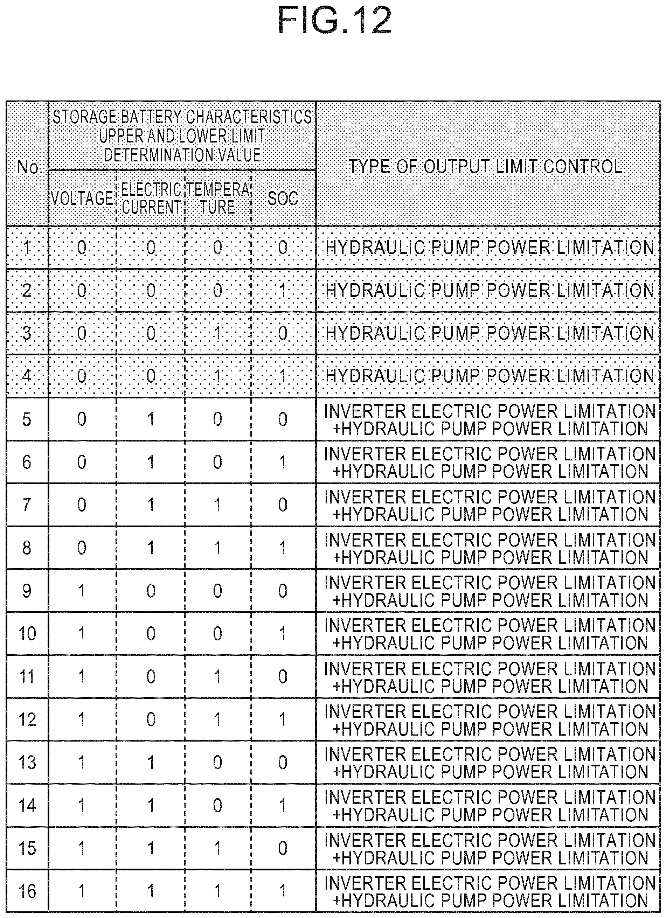

Fig. 11A shows the variation of the electric power of the inverter when limitation of the electric power of the inverter 15 is effected, and Fig. 11B shows the variation of the power of the hydraulic pump 17 when limitation of the power of the hydraulic pump 17 is effected. Fig. 12 shows the types of the output limit control by the output command unit 22F for each combination of the upper and lower limit determination values of respective storage battery characteristics of the electrical storage device 16.

Here, as shown in Fig. 11A, when limitation of the electric power of the inverter 15 is effected, since control is possible at a comparatively quick period by a switching element, the charging/discharging electric power of the electrical storage device 16 is limited without a time delay with respect to the required load of the hydraulic actuators 2A, 3A1, 4a-4c. Thus, the peak value of the charging/discharging electric power of the electrical storage device 16 can be limited.

In contrast, as shown in Fig. 11B, when limitation of the power of the hydraulic pump 17 is effected, since mechanical operation such as adjustment of the tilting angle of the swash plate is executed, the control period is slower compared to the time of effecting limitation of the electric power of the inverter 15, and a time delay occurs in limitation of the power of the hydraulic pump 17 with respect to the required load of the hydraulic actuators 2A, 3A1, 4a-4c. Therefore, although it is difficult to limit the peak value of the charging/discharging electric power of the electrical storage device 16, reduction of the average value of the charging/discharging electric power of the electrical storage device 16 is possible.

Moreover, when limitation of the electric power of the inverter 15 shown in Fig. 11A is effected while the engine 11 supplies the upper limit output, adjustment of the rotational speed of the engine 11 cannot catch up the sharp rise of the load of the hydraulic actuators 2A, 3A1, 4a-4c accompanying work of excavation and the like of the hybrid hydraulic excavator 1, and the engine 11 may possibly stop due to drop of the rotational speed of the engine 11. Therefore, it is required to effect limitation of the power of the hydraulic pump 17 effecting limitation of the electric power of the inverter 15 as little as possible.

Further, since the electrical storage device 16 is configured of at least the lithium ion battery 16A, since the charging capacity and the heat capacity of the electrical storage device 16 are large, even when short time and large electric power seen in the peak value of Fig. 11B is generated in the electrical storage device 16, the characteristics of the temperature and the SOC of the electrical storage device 16 have a hardly changeable tendency compared to the electric current and the voltage. In contrast, with respect to the characteristics of the electric current and the voltage of the electrical storage device 16, when short time and large electric power is generated in the electrical storage device 16, since over-voltage, over-electric current, and the like occur immediately, the time until reaching an abnormal state is short. Also, it is considered that the impact on deterioration is larger compared to the case of the SOC and the temperature because abnormal heat generation possibly occurs due to precipitation of metal lithium, damage of the terminal section of the battery cell, and so on.

Therefore, according to the first embodiment of the present invention, in S106, the output command unit 22F controls at least either one of the power of the hydraulic pump 17 and the electric power of the inverter 15 on the basis of at least either one of the voltage or the electric current and at least either one of the temperature or the SOC out of the storage battery characteristics. As shown in Fig. 12, for example, the power of the hydraulic pump 17 and the electric power of the inverter 15 are limited when the upper and lower limit determination value of at least either one of the voltage or the electric current out of the storage battery characteristics of the electrical storage device 16 is "1", and the power of the hydraulic pump 17 is limited in the case other than that, namely when the upper and lower limit determination value of both of the voltage and the electric current out of the storage battery characteristics of the electrical storage device 16 is "0" and the upper and lower limit determination value of at least either one of the temperature or the SOC is "1". Thus, limitation suitable to the nature of each storage battery characteristic can be effected. Also, when all of the upper and lower limit determination values of the voltage, electric current, temperature, and SOC of the electrical storage device 16 are "0", the output command unit 22F selects limitation of the power of the hydraulic pump 17 for the type of the output limit control, however, as far as that the upper and lower limit determination value of each storage battery characteristic of the electrical storage device 16 is "0", the output limit control is not effected.

When only limitation of the power of the hydraulic pump 17 is selected as the type of the output limit control in S106 (S106/YES), the output command unit 22F sets the value of the engine output command to the engine output upper limit value in S107. Also, the output command unit 22F sets the value of the hydraulic pump power command to the total value of the engine output upper limit value and the limit discharging electric power so as to reflect limitation of the power of the hydraulic pump 17 which is on the basis of respective storage battery characteristics of the electrical storage device 16, and sets the value of the inverter electric power command to the permissible discharging electric power so as not to reflect limitation of the electric power of the inverter 15 which is on the basis of respective storage battery characteristics of the electrical storage device 16.

Further, the output command unit 22F transmits the hydraulic pump power command, the engine output command, and the inverter electric power command to the pump displacement adjustment device 21, the engine controller 12, and the inverter 15 respectively, and finishes the control processing. Thus, since the capacity (displacement volume) of the hydraulic pump 17 is adjusted and the torque of the hydraulic pump 17 is controlled, the power of the hydraulic pump 17 is easily limited in response to the temperature and the SOC of the electrical storage device 16, the engine 11 can supply the upper limit output with respect to the required load of the hydraulic actuators 2A, 3A1, 4a-4c, and the motor generator 14 can assist the deficiency portion thereof. Therefore, since variation of the output of the engine 11 and the charging/discharging electric power of the electrical storage device 16 accompanying sharp increase of the load can be suppressed sufficiently, the engine 11 can be maintained in a good state.

Also, when both of the upper and lower limit determination values of the temperature and the SOC are "1" as No. 4 of Fig. 12, first, the charging electric power limiting factor $\eta cT$ and the discharging electric power limiting factor $\eta dT$ shown in Fig. 7 are reduced to forbid charging/discharging, and the temperature is adjusted to within a normal range by a temperature adjustment device such as a cooling fan that is not illustrated. Thereafter, charging is effected when the SOC is equal to or less than the lower limit value, discharging is effected when the SOC is equal to or less than the upper limit value, and the SOC is adjusted to within a normal range. Thus, by adjusting the SOC after adjusting the temperature, temperature rise by charging/discharging for adjustment of the SOC can be suppressed.

In contrast, when limitation of the power of the hydraulic pump 17 and limitation of the electric power of the inverter 15 are selected as the type of the output limit control in S106 (S106/NO), in S108, the output command unit 22F sets the value of the engine output command to the engine output upper limit value similarly to S107. Also, the output command unit 22F sets the value of the hydraulic pump power command to the total value of the engine output upper limit value and the limit discharging electric power so as to reflect limitation of the power of the hydraulic pump 17 which is on the basis of respective storage battery characteristics of the electrical storage device 16, and sets the value of the inverter electric power command to the limit discharging electric power so as to reflect limitation of the electric power of the inverter 15 which is on the basis of respective storage battery characteristics of the electrical storage device 16.

Further, the output command unit 22F transmits the hydraulic pump power command, the engine output command, and the inverter electric power command to the pump displacement adjustment device 21, the engine controller 12, and the inverter 15 respectively, and finishes the control processing. Thus, similarly to S107 described above, since the capacity (displacement volume) of the hydraulic pump 17 is adjusted and the torque of the hydraulic pump 17 is controlled, the power of the hydraulic pump 17 is easily limited in response to the temperature and the SOC of the electrical storage device 16, the engine 11 can supply the upper limit output with respect to the required load of the hydraulic actuators 2A, 3A1, 4a-4c, and the motor generator 14 can assist the deficiency portion thereof within the range of the limit discharging electric power. At this time, since the charging/discharging electric power of the electrical storage device 16 can be suppressed quickly by the switching element of the inverter 15, the values of the electric current and the voltage of the electrical storage device 16 can be made to fall within the upper and lower limit range quickly. Thus, even when short time and large electric power is generated in the electrical storage device 16, thermal impact by the lithium ion battery 16A of the electrical storage device 16 can be prevented, and therefore the state of the electrical storage device 16 can be maintained stably.

According to the hybrid hydraulic excavator 1 related to the first embodiment of the present invention thus configured, since the output command unit 22F of the hybrid controller 22 controls the power of the hydraulic pump 17 and the electric power of the inverter 15 in response to the storage battery characteristics of the voltage, electric current, temperature, and SOC of the electrical storage device 16, the charging/discharging electric power of the electrical storage device 16 can be controlled within the range of chargeable/dischargeable maximum electric power of the electrical storage device 16. Also, even when the load sharply increases due to contact of the front working mechanism 4 and an obstacle and so on during working of excavation and the like by the hybrid hydraulic excavator 1, at least either one of the power of the hydraulic pump 17 and the electric power of the inverter is limited considering the voltage, electric current, temperature, and SOC of the electrical storage device 16, thereby variation of the charging/discharging electric power of the electrical storage device 16 can be suppressed while keeping the output of the engine 11 at the upper limit output, therefore the rotational speed of the engine 11 can be made to easily follow a target rotational speed against sharp increase of the load. Thus, since charging/discharging of the electrical storage device 16 can be effected appropriately and stop of the engine 11 accompanying sharp increase of the load can be suppressed, stable motion of the hybrid hydraulic excavator 1 can be achieved.

[Second embodiment]

In addition to the configuration of the first embodiment, a second embodiment of the hybrid construction machine related to the present invention is configured such that the output command unit 22F limits the power of the hydraulic pump 17 and the electric power of the inverter 15 unless the values of respective storage battery characteristics of the voltage, electric current, temperature, and SOC of the electrical storage device 16 are within the upper and lower limit range described above after a predetermined time (180 sec as a concrete example) elapses after effecting limitation of the power of the hydraulic pump 17, for example. Also, in explanation of the second embodiment of the present invention, a portion same as or corresponding to the configuration of the first embodiment is marked with the same reference sign.

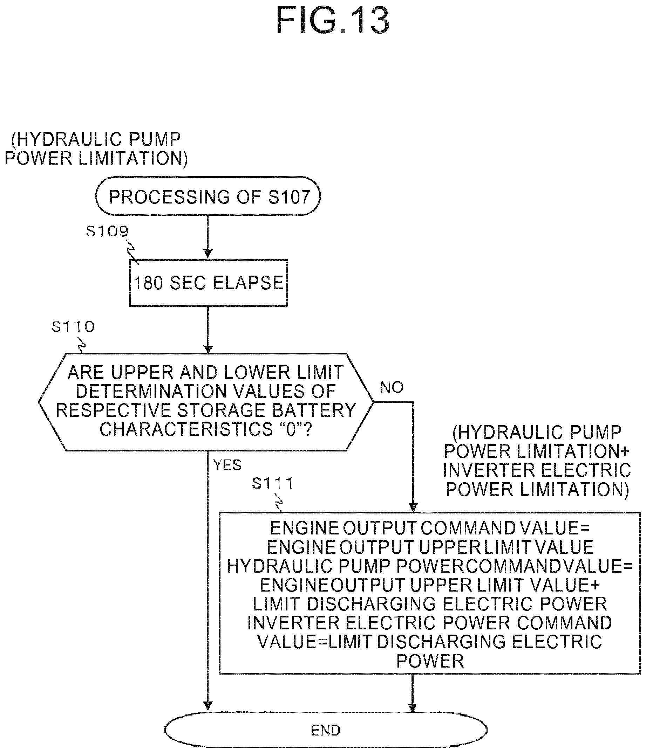

Next, control processing of the output command unit 22F related to the second embodiment of the present invention will be explained in detail referring to the flowchart of Fig. 13. Also, the control processing of the output command unit 22F related to the second embodiment of the present invention includes processing similar to that of S101-S108 shown in Fig. 8 described above, and duplicated explanation thereof is omitted.

As shown in Fig. 13, when 180 sec elapses after executing processing of S107 (S109), the output command unit 22F determines whether or not the values of respective storage battery characteristics of the voltage, electric current, temperature, and SOC of the electrical storage device 16 are within the upper and lower limit range, namely whether or not the upper and lower limit determination values of respective storage battery characteristics of the voltage, electric current, temperature, and SOC of the electrical storage device 16 are "0" (S110). At this time, when the output command unit 22F determines the upper and lower limit determination values of respective storage battery characteristics of the voltage, electric current, temperature, and SOC of the electrical storage device 16 to be "0" (S110/YES), the output command unit 22F finishes the control processing.

In contrast, when the upper and lower limit determination value of at least one of the characteristics of the voltage, electric current, temperature, and SOC of the electrical storage device 16 is determined to be "1" in S110 (S110/NO), the output command unit 22F sets the value of the engine output command to the engine output upper limit value, sets the value of the hydraulic pump power command to the total value of the engine output upper limit value and the limit discharging electric power so as to reflect limitation of the power of the hydraulic pump 17 which is on the basis of respective storage battery characteristics of the electrical storage device 16, and sets the value of the inverter electric power command to the limit discharging electric power so as to reflect limitation of the electric power of the inverter 15 which is on the basis of respective storage battery characteristics of the electrical storage device 16 (S111). Also, the output command unit 22F transmits the hydraulic pump power command, the engine output command, and the inverter electric power command to the pump displacement adjustment device 21, the engine controller 12, and the inverter 15 respectively, and finishes the control processing. Other configurations of the second embodiment are same as the configurations of the first embodiment described above, and duplicated explanation thereof is omitted.

According to the hybrid hydraulic excavator 1 related to the second embodiment of the present invention thus configured in processing of S107 shown in Fig. 8 and Fig. 13, in addition to that actions and effects similar to those of the first embodiment described above are secured, even when limitation of the power of the hydraulic pump 17 may not be effected normally by any chance due to the cause of communication abnormality and the like of each device of the hybrid hydraulic excavator 1, as far as the upper and lower limit determination value of any of the voltage, electric current, temperature, and SOC of the electrical storage device 16 is "1", the power of the hydraulic pump 17 and the electric power of the inverter 15 are limited in S111, and therefore the variation amount of the output of the engine 11 and the charging/discharging electric power of the electrical storage device 16 accompanying sharp increase of the load can be positively reduced. Thus, the effectiveness of limitation of the power of the hydraulic pump 17 and limitation of the electric power of the inverter 15 in control of the hybrid controller 22 can be improved.

[Third embodiment]

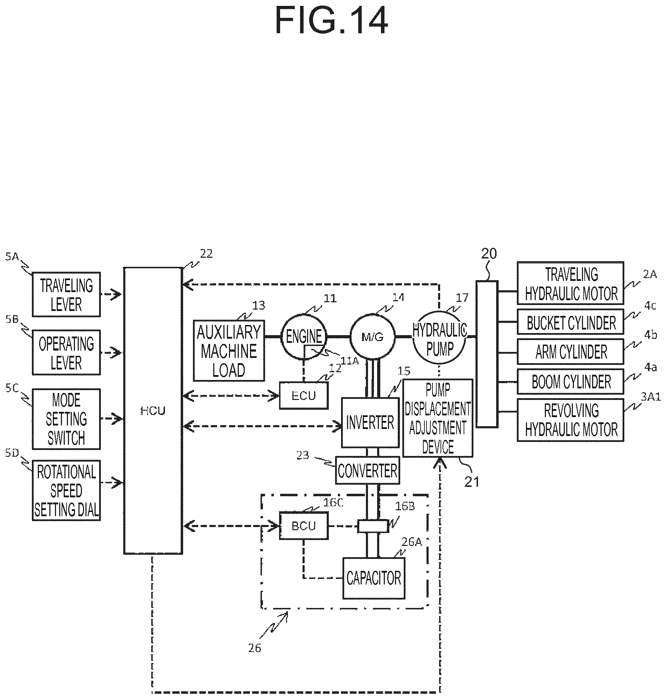

Fig. 14 is a drawing showing in detail a configuration of the inside of the revolving upper structure 3 related to a third embodiment of the present invention.
The third embodiment of the present invention differs from the first embodiment described above in that the electrical storage device 16 related to the first embodiment is configured to include the lithium ion battery 16A, whereas an electrical storage device 26 related to the third embodiment is configured to include a capacitor 26A as shown in Fig. 14, for example, instead of the lithium ion battery 16A. In this case, the electrical storage device 26 is connected to the inverter 15 through a converter 23. Also, in explanation of the third embodiment of the present invention, a portion same as or corresponding to the configuration of the first embodiment is marked with the same reference sign.

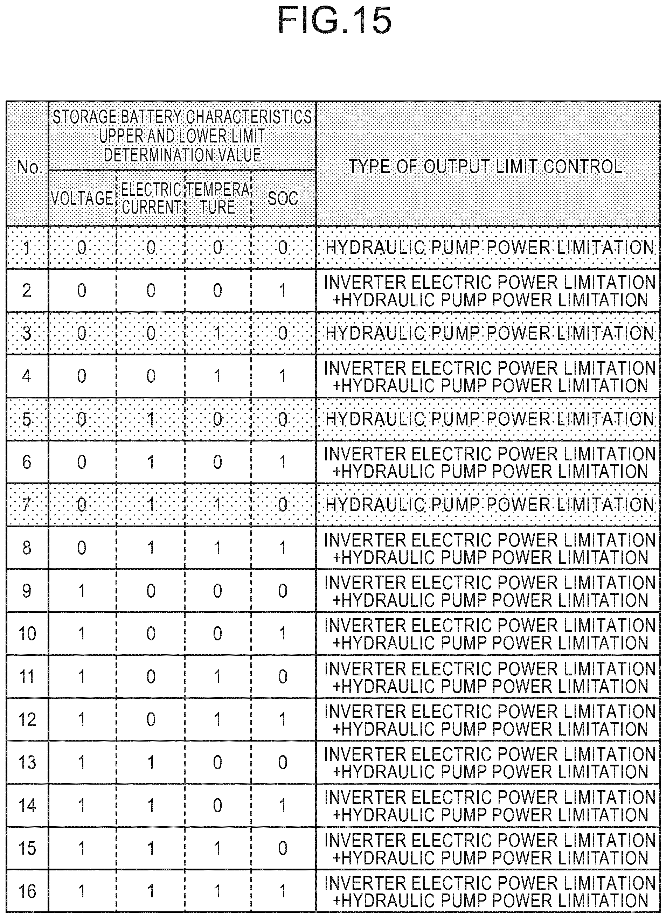

Fig. 15 shows the type of the output limit control by the output command unit 22F for each combination of the upper and lower limit determination values of respective storage battery characteristics of the electrical storage device 16.
Here, since the capacitor 26A of the electrical storage device 16 has a feature that the capacity density is very small compared to the lithium ion battery 16A related to the first embodiment, when the value of the SOC of the electrical storage device 16 deviates from the upper and lower limit range, a problem such as breakage of the capacitor 26A possibly occurs unless output limit control by the output command unit 22F is effected without a time delay. In contrast, since the output density of the capacitor 26A of the electrical storage device 16 is very high, there is a case the upper and lower limit values of the electric current of the electrical storage device 16 is specified in a battery forming component such as a bus bar. In such case, it is necessary to lower the average value of the charging/discharging electric power of the electrical storage device 16 instead of limiting the peak value of the charging/discharging electric power of the electrical storage device 16 considering the impact of heat generation and so on.
Therefore, in the third embodiment of the present invention, it is configured such that the output command unit 22F controls at least either one of the power of the hydraulic pump 17 and the electric power of the inverter 15 on the basis of at least either one of the voltage or the SOC of the storage battery characteristics of the electrical storage device 16 and at least either one of the electric current or the temperature of the storage battery characteristics. As shown in Fig. 15, for example, the power of the hydraulic pump 17 and the electric power of the inverter 15 are limited when the upper and lower limit determination value of at least either one of the voltage or the SOC of the storage battery characteristics of the electrical storage device 16 is "1", and the power of the hydraulic pump 17 is limited in a case other than that, namely when the upper and lower limit determination values of both of the voltage and the SOC of the storage battery characteristics of the electrical storage device 16 are "0" and the upper and lower limit determination value of at least either one of the electric current or the temperature is "1". Also, when all of the upper and lower limit determination values of the voltage, electric current, temperature, and SOC of the electrical storage device 16 are "0", the output command unit 22F selects limitation of the power of the hydraulic pump 17 as the type of the output limit control, however as far as the upper and lower limit determination values of respective storage battery characteristics of the electrical storage device 16 are "0", the output limit control is not executed. Other configurations of the third embodiment are same as the configurations of the first embodiment described above, and duplicated explanation thereof is omitted.

In the hybrid hydraulic excavator 1 also which is related to the third embodiment of the present invention thus configured, actions and effects similar to those of the first embodiment described above can be secured. Based on the above, by appropriately setting the type of the output limit control by the output command unit 22F for each combination of the upper and lower limit determination values of respective storage battery characteristics considering the feature of the electrical storage element of the lithium ion battery 16A and the capacitor 26A of the electrical storage devices 16, 26 as the first-third embodiments of the present invention, the output limit control suitable to each electrical storage element of the electrical storage devices 16, 26 can be executed.

Also, the present embodiments described above have been explained in detail for easy understanding of the present invention, and are not necessarily limited to those including all configurations explained. Furthermore, a part of a configuration of a certain embodiment can be replaced by a configuration of other embodiments, and a configuration of other embodiments can be added to a configuration of a certain embodiment.

In addition, although the first-third embodiments of the present invention were explained with respect to the configurations in which the electrical storage devices 16, 26 included the lithium ion battery 16A or the capacitor 26A, the present invention is not limited to the case, and can be also applied similarly to the electrical storage elements other than the above such as a nickel-hydrogen battery and an electrical storage element whose output lowers at the time of a low temperature by appropriately setting the type of the output limit control for each combination of the upper and lower limit determination values of respective storage battery characteristics according to the electrical storage element of the electrical storage device. Further, with respect to the same electrical storage element also, the type of the output limit control for each combination of the upper and lower limit determination values of respective storage battery characteristics may be set in response to the charging capacity and the heat capacity of the electrical storage device.

In addition, the hybrid construction machine related to the present embodiment was explained for a case of the hybrid hydraulic excavator 1, however the hybrid construction machine related to the present embodiment is not limited to the case, and may be, for example, hybrid construction machine (including plug-in hybrid construction machine) such as a hybrid wheel loader and a hybrid dump truck or battery type construction machine that is not mounted with the engine 11 and is driven only by the output of the electrical storage device 16.

## LIST OF REFERENCE SIGNS

1: Hybrid hydraulic excavator (hybrid construction machine)
2: Traveling body (hydraulic working device)
2A: Traveling hydraulic motor
3: Revolving upper structure (hydraulic working device)
3A1: Revolving hydraulic motor
4: Front working mechanism (hydraulic working device)
4A: Boom
4a: Boom cylinder
4B: Arm
4b: Arm cylinder
4C: Bucket
4c: Bucket cylinder
5A: Traveling lever
5B: Operating lever
5C: Mode setting switch (mode setting unit)
5D: Rotational speed setting dial
11: Engine
12: Engine controller (ECU)
14: Motor generator
15: Inverter
16, 26: Electrical storage device
16A: Lithium ion battery
16B: Electric current sensor
16C: Battery controller (BCU)
16C1: Temperature measurement unit
16C2: Voltage measurement unit
16C3: Electric current measurement unit
16C4: SOC estimation unit
16C5: Permissible charging/discharging electric power calculation unit
17: Hydraulic pump
21: Pump displacement adjustment device
22: Hybrid controller (HCU)
22A: Hydraulic pump required power estimation unit
22B: Engine output upper limit calculation unit
22C: Storage battery characteristics upper and lower limit determination unit
22D: Charging/discharging electric power limiting factor calculation unit
22E: Limit charging/discharging electric power calculation unit

22F: Output command unit
23: Converter
26A: Capacitor

## Claims

1. Hybrid construction machine (1), comprising:

an engine (11);
a hydraulic pump (17) that is driven by the engine (11);
a hydraulic working device (3, 4) that is driven by hydraulic oil discharged from the hydraulic pump (17);
a motor generator (14) that transmits torque with the engine (11);
an inverter (15) that controls the motor generator (14);
an electrical storage device (16, 26) that effects charging/discharging through the inverter (15); and
a control device that controls power of the hydraulic pump (17) and electric power of the inverter (15) in response to storage battery characteristics of the electrical storage device (16, 26),
**characterized in that** the control device limits both of power of the hydraulic pump (17) and electric power of the inverter (15) when at least either one of electric current or voltage of the storage battery characteristics of the electrical storage device (16, 26) is out of a predetermined range, and limits only power of the hydraulic pump (17) when electric current and voltage of the storage battery characteristics of the electrical storage device (16, 26) are within the predetermined range and at least either one of temperature or a state of charge of the storage battery characteristics of the electrical storage device (16, 26) is out of a predetermined range.

2. The hybrid construction machine (1) according to claim 1, wherein the electrical storage device (16, 26) comprises a lithium ion battery (16A).

3. Hybrid construction machine (1), comprising:

an engine (11);
a hydraulic pump (17) that is driven by the engine (11);
a hydraulic working device (3, 4) that is driven by hydraulic oil discharged from the hydraulic pump (17);
a motor generator (14) that transmits torque with the engine (11);
an inverter (15) that controls the motor generator (14);
an electrical storage device (16, 26) that effects charging/discharging through the inverter (15); and
a control device that controls power of the hydraulic pump (17) and electric power of the inverter (15) in response to storage battery characteristics of the electrical storage device (16, 26),
**characterized in that** the control device limits both of power of the hydraulic pump (17) and electric power of the inverter (15) when at least either one of voltage or a state of charge of storage battery characteristics of the electrical storage device (16, 26) is out of a predetermined range, and limits only power of the hydraulic pump (17) when voltage and the state of charge of the storage battery characteristics of the electrical storage device (16, 26) are within the predetermined range and at least either one of electric current or temperature of the storage battery characteristics of the electrical storage device (16, 26) is out of a predetermined range.

4. The hybrid construction machine according to claim 3, wherein the electrical storage device (16, 26) comprises a capacitor (26A).

## Patentansprüche

1. Hybridbaumaschine (1), die Folgendes umfasst:

eine Kraftmaschine (11);
eine Hydraulikpumpe (17), die von der Kraftmaschine (11) angetrieben wird;
eine hydraulische Arbeitsvorrichtung (3, 4), die durch das Hydrauliköl angetrieben wird, das von der Hydraulikpumpe (17) gefördert wird;
einen Motorgenerator (14), der mit der Kraftmaschine (11) ein Drehmoment überträgt;
einen Wechselrichter (15), der den Motorgenerator (14) steuert;
eine elektrische Speichervorrichtung (16, 26), die ein Laden/Entladen durch den Wechselrichter (15) bewirkt; und
eine Steuervorrichtung, die die Leistung der Hydraulikpumpe (17) und die elektrische Leistung des Wechselrichters (15) als Reaktion auf Speicherbatterieeigenschaften der elektrischen Speichervorrichtung (16, 26) steuert,
**dadurch gekennzeichnet, dass** die Steuervorrichtung sowohl die Leistung der Hydraulikpumpe (17) als auch die elektrische Leistung des Wechselrichters (15) begrenzt, wenn der elektrische Strom und/oder die elektrische Spannung der Speicherbatterieeigenschaften der elektrischen Speichervorrichtung (16, 26) in einem vorbestimmten Bereich liegen, und nur die Leistung der Hydraulikpumpe (17) begrenzt, wenn der elektrische Strom und die Spannung der Speicherbatterieeigenschaften der elektrischen Speichervorrichtung (16, 26) in dem vorbestimmten Bereich liegen und die Temperatur und/oder der Ladungszustand der Speicherbatterieeigenschaften der elektrischen Speichervorrichtung (16, 26) außerhalb eines vorbestimmten Bereichs liegt.

2. Hybridbaumaschine (1) nach Anspruch 1, wobei die elektrische Speichervorrichtung (16, 26) eine Lithium-Ionen-Batterie (16A) umfasst.

3. Hybridbaumaschine (1), die Folgendes umfasst:

eine Kraftmaschine (11);
eine Hydraulikpumpe (17), die von der Kraftmaschine (11) angetrieben wird;
eine hydraulische Arbeitsvorrichtung (3, 4), die durch das Hydrauliköl angetrieben wird, das von der Hydraulikpumpe (17) gefördert wird;
einen Motorgenerator (14), der mit der Kraftmaschine (11) ein Drehmoment überträgt;
einen Wechselrichter (15), der den Motorgenerator (14) steuert;
eine elektrische Speichervorrichtung (16, 26), die ein Laden/Entladen durch den Wechselrichter (15) bewirkt; und
eine Steuervorrichtung, die die Leistung der Hydraulikpumpe (17) und die elektrische Leistung des Wechselrichters (15) als Reaktion auf Speicherbatterieeigenschaften der elektrischen Speichervorrichtung (16, 26) steuert, **dadurch gekennzeichnet, dass** die Steuervorrichtung sowohl die Leistung der Hydraulikpumpe (17) als auch die elektrische Leistung des Wechselrichters (15) begrenzt, wenn die Spannung und/oder ein Ladungszustand der Speicherbatterieeigenschaften der elektrischen Speichervorrichtung (16, 26) in einem vorbestimmten Bereich liegen, und nur die Leistung der Hydraulikpumpe (17) begrenzt, wenn die Spannung und der Ladungszustand der Speicherbatterieeigenschaften der elektrischen Speichervorrichtung (16, 26) in dem vorbestimmten Bereich liegen und der elektrische Strom und/oder die Temperatur der Speicherbatterieeigenschaften der elektrischen Speichervorrichtung (16, 26) außerhalb eines vorbestimmten Bereichs liegen.

4. Hybridbaumaschine nach Anspruch 3, wobei die elektrische Speichervorrichtung (16, 26) einen Kondensator (26A) umfasst.

**Revendications**

1. Machine de chantier hybride (1), comprenant :

un moteur (11) ;
une pompe hydraulique (17) qui est entraînée par le moteur (11) ;
un dispositif de travail hydraulique (3, 4) qui est entraînée par de l'huile hydraulique refoulée depuis la pompe hydraulique (17) ;
une motrice génératrice (14) qui transmet un couple avec le moteur (11) ;
un onduleur (15) qui commande la motrice génératrice (14) ;
un dispositif de stockage électrique (16, 26) qui effectue une charge/décharge via l'onduleur (15) ; et
un dispositif de commande qui commande la puissance de la pompe hydraulique (17) et la puissance électrique de l'onduleur (15) en réponse aux caractéristiques de batterie de stockage du dispositif de stockage électrique (16, 26),
**caractérisée en ce que** le dispositif de commande limite à la fois la puissance de la pompe hydraulique (17) et la puissance électrique de l'onduleur (15) lorsque que l'un ou l'autre au moins du courant électrique ou du voltage électrique des caractéristiques de batterie de stockage du dispositif de stockage électrique (16, 26) tombe hors d'une plage prédéterminée, et limite uniquement la puissance de la pompe hydraulique (17) quand le courant et le voltage électrique des caractéristiques de batterie de stockage du dispositif de stockage électrique (16, 26) tombent à l'intérieur de la plage prédéterminée et que l'une ou l'autre au moins de la température ou d'un état de charge des caractéristiques de batterie de stockage du dispositif de stockage électrique (16, 26) tombe hors d'une plage prédéterminée.

2. Machine de chantier hybride (1) selon la revendication 1, dans laquelle le dispositif de stockage électrique (16, 26) comprend une batterie aux ions lithium (16A).

3. Machine de chantier hybride (1), comprenant :

un moteur (11) ;
une pompe hydraulique (17) qui est entraînée par le moteur (11) ;
un dispositif de travail hydraulique (3), 4) qui est entraîné par de l'huile hydraulique refoulée depuis la pompe hydraulique (17) ;
une motrice génératrice (14) qui transmet un couple avec le moteur (11) ;
un onduleur (15) qui commande la motrice génératrice (14) ;

un dispositif de stockage électrique (16, 26) qui effectue une charge/décharge via l'onduleur (15) ; et

un dispositif de commande qui commande la puissance de la pompe hydraulique (17) et la puissance électrique de l'onduleur (15) en réponse à des caractéristiques de batterie de stockage du dispositif de stockage électrique (16, 26),

**caractérisée en ce que** le dispositif de commande limite à la fois la puissance de la pompe hydraulique (17) et la puissance électrique de l'onduleur (15) quand l'un ou l'autre au moins du voltage électrique ou de l'état de charge des caractéristiques de batterie de stockage du dispositif de stockage électrique (16, 26) tombe hors d'une plage prédéterminée, et limite uniquement la puissance de la pompe hydraulique (17) quand le voltage électrique et l'état de charge des caractéristiques de batterie de stockage du dispositif de stockage électrique (16, 26) tombe à l'intérieur de la plage prédéterminée et que l'un ou l'autre au moins du courant électrique ou de la température des caractéristiques de batterie de stockage du dispositif de stockage électrique (16, 26) tombe hors d'une plage prédéterminée.

4. Machine de chantier hybride selon la revendication 3, dans laquelle le dispositif de stockage électrique (16, 26) comprend un condensateur (26A).

# FIG. 1

# FIG. 2

# FIG. 3

# FIG. 4

# FIG. 5

ENGINE OUTPUT UPPER LIMIT VALUE

ENGINE ROTATIONAL SPEED

# FIG. 6A

VOLTAGE UPPER AND LOWER LIMIT DETERMINATION VALUE

# FIG. 6B

ELECTRIC CURRENT UPPER AND LOWER LIMIT DETERMINATION VALUE

# FIG. 6C

TEMPERATURE UPPER AND LOWER LIMIT DETERMINATION VALUE

# FIG. 6D

SOC UPPER AND LOWER LIMIT DETERMINATION VALUE

# FIG. 7A

# FIG. 7B

# FIG. 7C

# FIG. 7D

# FIG. 7E

# FIG. 7F

# FIG. 8

START

S101
INVERTER REQUIRED ELECTRIC POWER=HYDRAULIC PUMP REQUIRED POWER-ENGINE OUTPUT UPPER LIMIT VALUE

S102
INVERTER REQUIRED ELECTRIC POWER<0 — NO

S103 (REGENERATION) YES

max (INVERTER REQUIRED ELECTRIC POWER, LIMIT CHARGING ELECTRIC POWER)<INVERTER ELECTRIC POWER COMMAND VALUE<0
HYDRAULIC PUMP POWER COMMAND VALUE=HYDRAULIC PUMP REQUIRED POWER
ENGINE OUTPUT COMMAND VALUE=HYDRAULIC PUMP POWER COMMAND VALUE+INVERTER ELECTRIC POWER COMMAND VALUE

(POWERING)

S104
HYDRAULIC PUMP REQUIRED POWER<LIMIT DISCHARGING ELECTRIC POWER+ENGINE OUTPUT UPPER LIMIT VALUE

(WITHOUT OUTPUT LIMITATION) YES — S105

INVERTER ELECTRIC POWER COMMAND VALUE=INVERTER REQUIRED ELECTRIC POWER
HYDRAULIC PUMP POWER COMMAND VALUE=HYDRAULIC PUMP REQUIRED POWER
ENGINE OUTPUT COMMAND VALUE=ENGINE OUTPUT UPPER LIMIT VALUE

(WITH OUTPUT LIMITATION) NO

S106
IS TYPE OF OUTPUT LIMIT CONTROL ONLY HYDRAULIC PUMP POWER LIMITATION?

(HYDRAULIC PUMP POWER LIMITATION) YES — S107

(HYDRAULIC PUMP POWER LIMITATION+ INVERTER ELECTRIC POWER LIMITATION) S108 NO

ENGINE OUTPUT COMMAND VALUE=ENGINE OUTPUT UPPER LIMIT VALUE
HYDRAULIC PUMP POWER COMMAND VALUE=ENGINE OUTPUT UPPER LIMIT VALUE+LIMIT DISCHARGING ELECTRIC POWER
INVERTER ELECTRIC POWER COMMAND VALUE=PERMISSIBLE DISCHARGING ELECTRIC POWER

ENGINE OUTPUT COMMAND VALUE=ENGINE OUTPUT UPPER LIMIT VALUE
HYDRAULIC PUMP POWER COMMAND VALUE=ENGINE OUTPUT UPPER LIMIT VALUE+LIMIT DISCHARGING ELECTRIC POWER
INVERTER ELECTRIC POWER COMMAND VALUE=LIMIT DISCHARGING ELECTRIC POWER

END

# FIG. 9

ELECTRIC POWER

HYDRAULIC PUMP REQUIRED POWER

ENGINE OUTPUT
UPPER LIMIT VALUE

TIME

ELECTRIC POWER

POWERING
(DISCHARGING)

INVERTER REQUIRED
ELECTRIC POWER

TIME

REGENERATING
(CHARGING)

# FIG.10

ELECTRIC POWER

INVERTER ELECTRIC POWER
COMMAND VALUE SETTING RANGE

TIME

LIMIT CHARGING ELECTRIC POWER

INVERTER REQUIRED ELECTRIC POWER

REGENERATING (CHARGING)

# FIG.11A

INVERTER ELECTRIC
POWER LIMITATION

REQUIRED LOAD

OUTPUT

INVERTER ELECTRIC POWER

TIME [s]

# FIG.11B

HYDRAULIC PUMP POWER
LIMITATION

REQUIRED LOAD

OUTPUT

HYDRAULIC PUMP POWER

TIME [s]

# FIG.12

| No. | STORAGE BATTERY CHARACTERISTICS UPPER AND LOWER LIMIT DETERMINATION VALUE | | | | TYPE OF OUTPUT LIMIT CONTROL |
|---|---|---|---|---|---|
| | VOLTAGE | ELECTRIC CURRENT | TEMPERATURE | SOC | |
| 1 | 0 | 0 | 0 | 0 | HYDRAULIC PUMP POWER LIMITATION |
| 2 | 0 | 0 | 0 | 1 | HYDRAULIC PUMP POWER LIMITATION |
| 3 | 0 | 0 | 1 | 0 | HYDRAULIC PUMP POWER LIMITATION |
| 4 | 0 | 0 | 1 | 1 | HYDRAULIC PUMP POWER LIMITATION |
| 5 | 0 | 1 | 0 | 0 | INVERTER ELECTRIC POWER LIMITATION +HYDRAULIC PUMP POWER LIMITATION |
| 6 | 0 | 1 | 0 | 1 | INVERTER ELECTRIC POWER LIMITATION +HYDRAULIC PUMP POWER LIMITATION |
| 7 | 0 | 1 | 1 | 0 | INVERTER ELECTRIC POWER LIMITATION +HYDRAULIC PUMP POWER LIMITATION |
| 8 | 0 | 1 | 1 | 1 | INVERTER ELECTRIC POWER LIMITATION +HYDRAULIC PUMP POWER LIMITATION |
| 9 | 1 | 0 | 0 | 0 | INVERTER ELECTRIC POWER LIMITATION +HYDRAULIC PUMP POWER LIMITATION |
| 10 | 1 | 0 | 0 | 1 | INVERTER ELECTRIC POWER LIMITATION +HYDRAULIC PUMP POWER LIMITATION |
| 11 | 1 | 0 | 1 | 0 | INVERTER ELECTRIC POWER LIMITATION +HYDRAULIC PUMP POWER LIMITATION |
| 12 | 1 | 0 | 1 | 1 | INVERTER ELECTRIC POWER LIMITATION +HYDRAULIC PUMP POWER LIMITATION |
| 13 | 1 | 1 | 0 | 0 | INVERTER ELECTRIC POWER LIMITATION +HYDRAULIC PUMP POWER LIMITATION |
| 14 | 1 | 1 | 0 | 1 | INVERTER ELECTRIC POWER LIMITATION +HYDRAULIC PUMP POWER LIMITATION |
| 15 | 1 | 1 | 1 | 0 | INVERTER ELECTRIC POWER LIMITATION +HYDRAULIC PUMP POWER LIMITATION |
| 16 | 1 | 1 | 1 | 1 | INVERTER ELECTRIC POWER LIMITATION +HYDRAULIC PUMP POWER LIMITATION |

# FIG.13

(HYDRAULIC PUMP
POWER LIMITATION)

PROCESSING OF S107

S109

180 SEC ELAPSE

S110

ARE UPPER AND LOWER LIMIT
DETERMINATION VALUES OF
RESPECTIVE STORAGE BATTERY
CHARACTERISTICS "0"?

NO

YES

(HYDRAULIC PUMP
POWER LIMITATION+
INVERTER ELECTRIC
POWER LIMITATION)

S111

ENGINE OUTPUT COMMAND VALUE=
ENGINE OUTPUT UPPER LIMIT VALUE
HYDRAULIC PUMP POWER COMMAND VALUE=
ENGINE OUTPUT UPPER LIMIT VALUE+
LIMIT DISCHARGING ELECTRIC POWER
INVERTER ELECTRIC POWER COMMAND
VALUE=LIMIT DISCHARGING ELECTRIC
POWER

END

# FIG.14

# FIG.15

| No. | STORAGE BATTERY CHARACTERISTICS UPPER AND LOWER LIMIT DETERMINATION VALUE | | | | TYPE OF OUTPUT LIMIT CONTROL |
|---|---|---|---|---|---|
| | VOLTAGE | ELECTRIC CURRENT | TEMPERA TURE | SOC | |
| 1 | 0 | 0 | 0 | 0 | HYDRAULIC PUMP POWER LIMITATION |
| 2 | 0 | 0 | 0 | 1 | INVERTER ELECTRIC POWER LIMITATION +HYDRAULIC PUMP POWER LIMITATION |
| 3 | 0 | 0 | 1 | 0 | HYDRAULIC PUMP POWER LIMITATION |
| 4 | 0 | 0 | 1 | 1 | INVERTER ELECTRIC POWER LIMITATION +HYDRAULIC PUMP POWER LIMITATION |
| 5 | 0 | 1 | 0 | 0 | HYDRAULIC PUMP POWER LIMITATION |
| 6 | 0 | 1 | 0 | 1 | INVERTER ELECTRIC POWER LIMITATION +HYDRAULIC PUMP POWER LIMITATION |
| 7 | 0 | 1 | 1 | 0 | HYDRAULIC PUMP POWER LIMITATION |
| 8 | 0 | 1 | 1 | 1 | INVERTER ELECTRIC POWER LIMITATION +HYDRAULIC PUMP POWER LIMITATION |
| 9 | 1 | 0 | 0 | 0 | INVERTER ELECTRIC POWER LIMITATION +HYDRAULIC PUMP POWER LIMITATION |
| 10 | 1 | 0 | 0 | 1 | INVERTER ELECTRIC POWER LIMITATION +HYDRAULIC PUMP POWER LIMITATION |
| 11 | 1 | 0 | 1 | 0 | INVERTER ELECTRIC POWER LIMITATION +HYDRAULIC PUMP POWER LIMITATION |
| 12 | 1 | 0 | 1 | 1 | INVERTER ELECTRIC POWER LIMITATION +HYDRAULIC PUMP POWER LIMITATION |
| 13 | 1 | 1 | 0 | 0 | INVERTER ELECTRIC POWER LIMITATION +HYDRAULIC PUMP POWER LIMITATION |
| 14 | 1 | 1 | 0 | 1 | INVERTER ELECTRIC POWER LIMITATION +HYDRAULIC PUMP POWER LIMITATION |
| 15 | 1 | 1 | 1 | 0 | INVERTER ELECTRIC POWER LIMITATION +HYDRAULIC PUMP POWER LIMITATION |
| 16 | 1 | 1 | 1 | 1 | INVERTER ELECTRIC POWER LIMITATION +HYDRAULIC PUMP POWER LIMITATION |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5225779 B
- EP 2666692 A
- EP 2374945 A